# EUROPEAN PATENT APPLICATION

(11) **EP 1 184 916 A2**
(43) Date of publication of application: **06.03.2002**
(21) Application number: 01121176.0
(22) Date of filing: 04.09.2001
(51) Int. Cl.: H01M 2/06

(54) **Sealed type lead acid battery**

(30) Priority: 04.09.2000 JP 2000267517
(71) Applicant: Japan Storage Battery Co., Ltd., Kyoto-shi, Kyoto 601-8520 (JP)
(72) Inventor: Higa, Naoki, Japan Storage Battery Co., Ltd., Kyoto-shi, Kyoto 601-8520 (JP)
(74) Representative: Grünecker, Kinkeldey, Stockmair & Schwanhäusser Anwaltssozietät

(57) **Abstract**

The sealed type lead acid battery according to the invention comprises a battery case having an upper wall provided with an inner surface and an outer surface (pierced with holes) in which an electrolytic solution and electrodes are received, an annular protrusion (25) provided on the inner surface of the upper wall (5) surrounding the holes (23), a pole (13) connected to the electrodes and disposed beneath the holes, a male thread member (19) having one end embedded in the pole and the other end protruding from the pole to extend from the interior of the battery case to the exterior of the battery case through the hole, and a female thread member (31) engaged with the male thread at the portion thereof protruding from the upper wall. In this arrangement, the female thread member is tightened so that the annular protrusion bites into the upper surface of the pole. In accordance with the sealed type lead acid battery having this arrangement, a male thread member and a female thread member made of a material different from that of the pole can be used, making it possible to tighten these members at a considerably high torque. Accordingly, the annular protrusion can bite the upper surface of the pole thoroughly, making it possible to isolate securely between the interior of the battery case and the exterior of the battery case and hence enhance the airtightness of the battery case.

## Description

### FIELD OF THE INVENTION

The present invention relates to a sealed type lead acid battery.

### BACKGROUND OF THE INVENTION

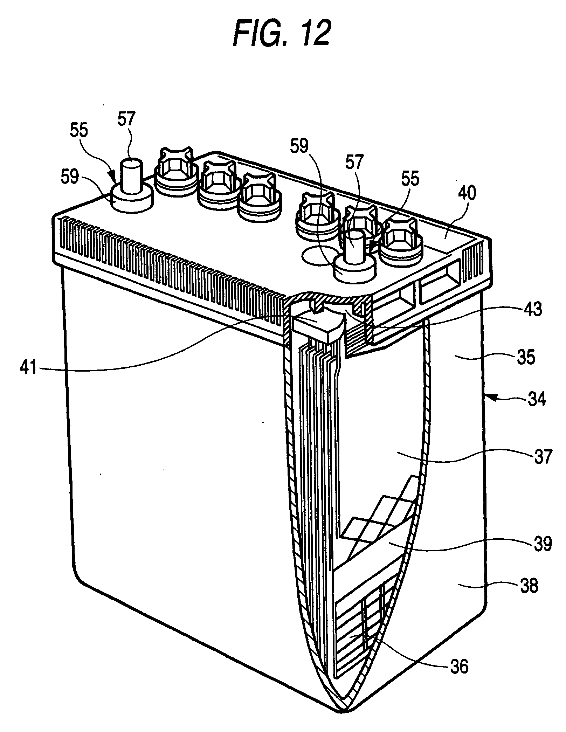

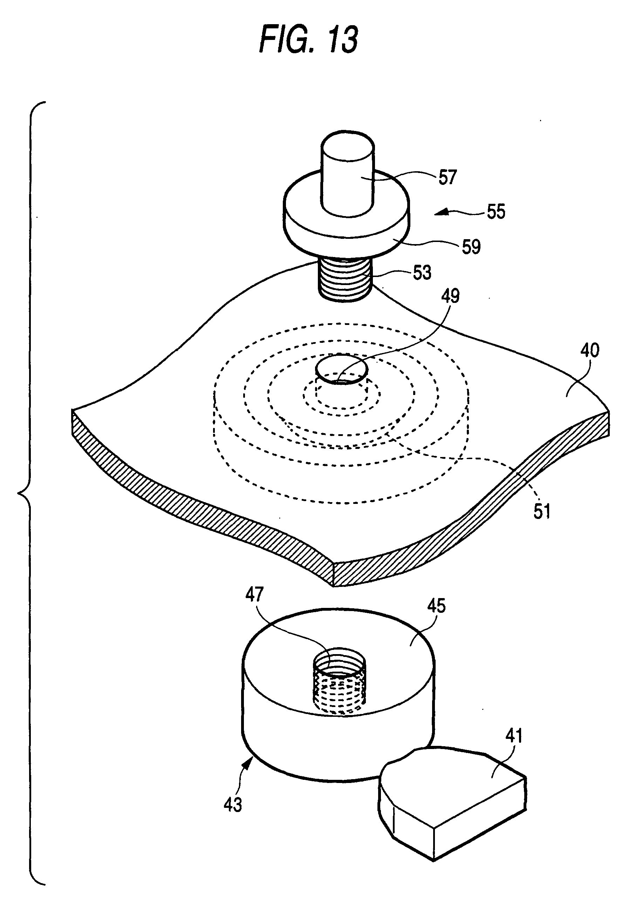

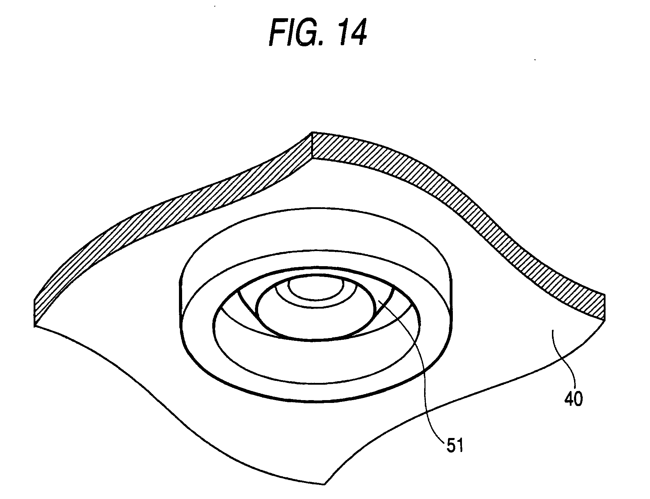

A sealed type lead acid battery can be in a form having a terminal portion filled with a sealing agent, in a form having a terminal portion sealed with a packing or in a form having a terminal and a pole tightened to each other. A sealed type lead acid battery in the last form has a structure, for example, as shown in Figs. 12 to 15B. In some detail, this sealed type lead acid battery 34 comprises a positive electrode 36, a negative electrode 37 and an electrolytic solution (not shown) received altogether in a prismatic battery case 35. The battery case 35 comprises a prismatic solid battery case body 38 having an opening closed by a cover 40. In the interior of the battery case 35, a plurality of sheets of prismatic flat positive electrodes 36 and negative electrodes 37 are laminated on each other with a separator 39 provided interposed therebetween. The laminate is disposed almost parallel to the side walls of the battery case 35. The positive electrode 36 and the negative electrode 37 are connected to a pole 43 made of, e.g., Pb-Sn alloy at the portion thereof close to the upper corner through a strap 41, respectively. The pole 43 is columnar and is disposed in such an arrangement that the upper surface 45 thereof lies almost parallel to the cover 40. The pole 43 has a female thread 47 hole portion formed therein in such an arrangement that it opens at the upper portion thereof.

On the other hand, the cover 40 of the battery case is pierced with a hole 49 above the pole 43. An annular protrusion 51 is provided on the inner surface of the cover 40 surrounding the hole 49. In this arrangement, a terminal 55 made of iron having a male thread 53 extends downward through the hole 49 and is engaged with the female thread pole portion 47 of the pole 43 below the cover 40. The terminal 55 comprises a small diameter column 57 having the male thread portion 53 formed thereon and a large diameter flange portion 59 provided substantially at the center thereof.

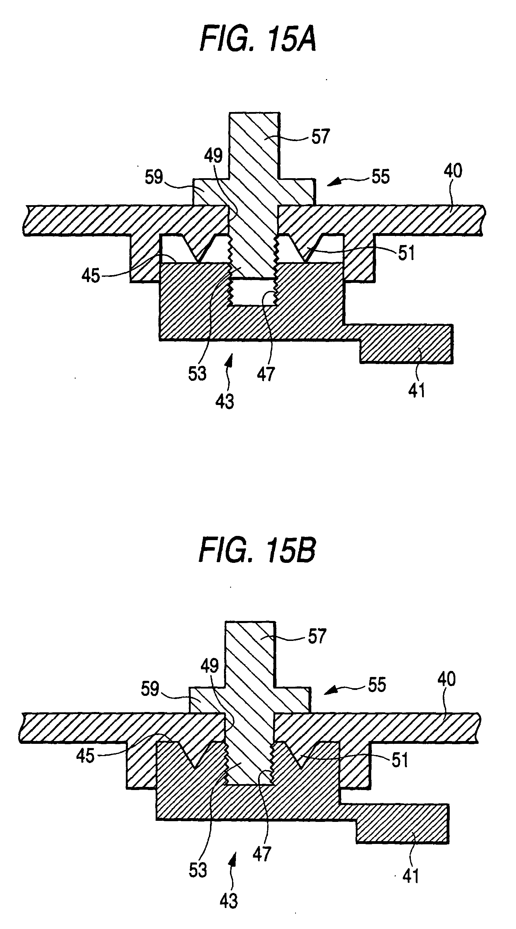

As the male thread 53 and the female thread hole portion 47 are tightened as shown in Figs. 15A and 15B, the annular protrusion 51 causes the pole 43 made of a relatively soft Pb-Sn alloy to be deformed on the upper surface thereof so that the upper surface 45 thus deformed and the annular protrusion 51 come in close contact with each other. Accordingly, as the upper surface 45 of the pole 43 is deformed more when these threads are tightened more, the contact area of the annular protrusion 51 with the upper surface 45 of the pole 43 increases to assure more airtightness.

However, this structure is disadvantageous in airtightness because these threads cannot be tightened more hardly at a high torque, in order to obtain sufficient contact area of the annular protrusion 51 with the upper surface 45 of the pole 43. In other words, when the iron terminal 55 is tightened at a high torque, the female thread hole portion 47 of the pole 43 made of Pb-Sn alloy, which is a soft material, is crushed, making it less likely that these threads can be tightened sufficiently.

Of course, the pole 43 can be made of a material harder than Pb-Sn alloy. However, in such a case, the pole 43 made of such a harder material can hardly be deformed by the annular protrusion 51 and thus leaves something to be desired in airtightness.

### SUMMARY OF THE INVENTION

It is therefore an object of the present invention to provide a sealed type lead acid battery with an enhanced airtightness and hence an enhanced life and reliability.

A sealed type lead acid battery according to the invention comprises a battery case having an upper wall having an inner surface and an outer surface (pierced with hole) in which an electrolytic solution and electrodes are received, an annular protrusion provided on the inner surface of the upper wall surrounding the holes, a pole connected to the electrodes and disposed beneath the holes, a male thread member having one end embedded in the pole and another end protruding from the pole to extend from the interior of the battery case to the exterior of the battery case through the hole, and a female thread member engaged with the male thread member at the portion thereof protruding from the upper wall. In this arrangement, the female thread member is tightened so that the annular protrusion bites into the upper surface of the pole.

In accordance with the sealed type lead acid battery having this arrangement, a male thread member and a female thread member made of a material different from that of the pole can be used, making it possible to tighten these thread members at a considerably high torque. Accordingly, the annular protrusion can bite the upper surface of the pole thoroughly, making it possible to isolate securely between the interior of the battery case and the exterior of the battery case and hence enhance the airtightness of the battery case.

### BRIEF DESCRIPTION OF THE DRAWINGS

By way of example and to make the description more clear, reference is made to the accompanying drawings in which:
Fig. 1 is a partly cutaway perspective view of a sealed type lead acid battery according to a first embodiment of the invention;
Fig. 2 is a perspective view of the sealed portion of the sealed type lead acid battery according to the first embodiment of the invention;
Fig. 3 is a perspective view of the cover of the battery case of the sealed type lead acid battery according to the first embodiment of the invention as viewed from below;
Fig. 4 is a sectional view of a sealed portion of the sealed type lead acid battery according to the first embodiment of the invention;
Fig. 5 is a sectional view of another sealed portion of the sealed type lead acid battery according to the first embodiment of the invention;
Fig. 6 is a sectional view of a sealed portion of the sealed type lead acid battery according to a second embodiment of the present invention;
Fig. 7 is a sectional view of a sealed portion of the sealed type lead acid battery according to a third embodiment of the present invention;
Fig. 8 is a sectional view of a sealed portion of the sealed type lead acid battery according to a fourth embodiment of the present invention;
Fig. 9 is a sectional view of a sealed portion of the sealed type lead acid battery according to a fifth embodiment of the present invention;
Fig. 10 is a sectional view of a sealed portion of the sealed type lead acid battery according to a sixth embodiment of the present invention;
Fig. 11 is a sectional view of a sealed portion of the sealed type lead acid battery according to a seventh embodiment of the present invention;
Fig. 12 is a partly cutaway perspective view of a conventional sealed type lead acid battery;
Fig. 13 is a perspective view of a sealed portion of the conventional sealed type lead acid battery;
Fig. 14 is a perspective view of the cover of the battery case of the conventional sealed type lead acid battery as viewed from below;
Fig. 15A is a sectional view of a sealed portion of the conventional sealed type lead acid battery; and
Fig. 15B is a sectional view of another sealed portion of the conventional sealed type lead acid battery.

### DETAILED DESCRIPTION OF THE INVENTION

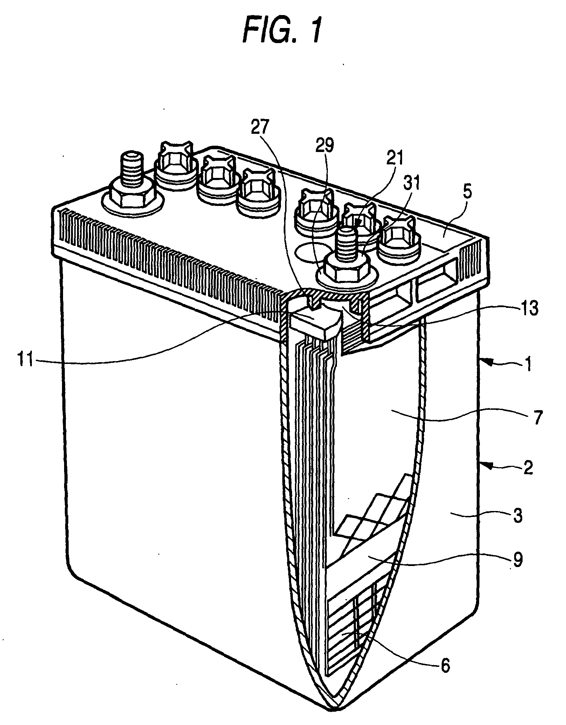

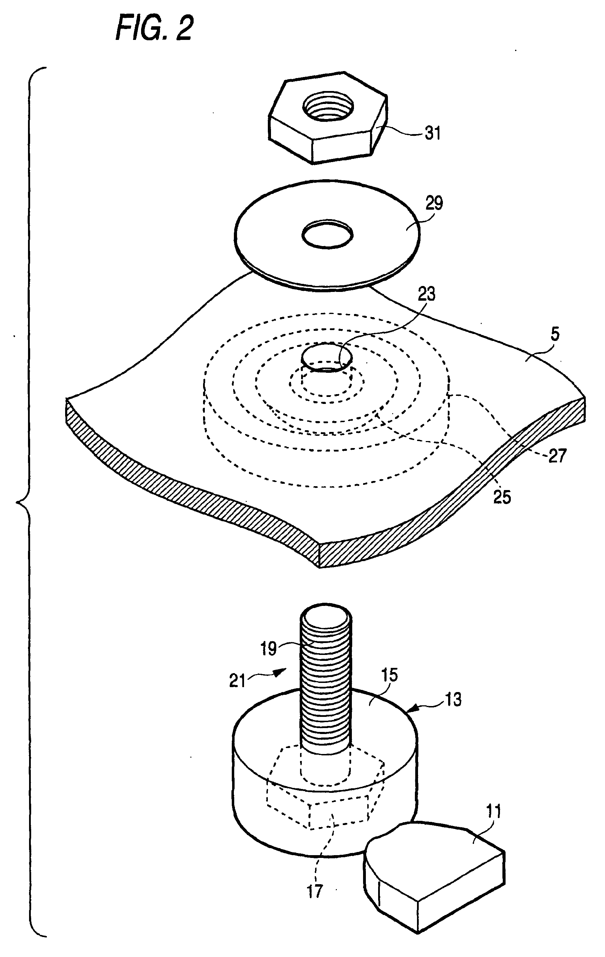

The first embodiment of implication of the present invention will be described in connection with Figs. 1 to 5.

A sealed type lead acid battery 1 according to the first embodiment comprises a positive electrode 6, a negative electrode 7 and an electrolytic solution (not shown) received altogether in, e.g., a prismatic battery case 2 made of a polypropylene. The battery case 2 comprises a prismatic solid battery case body 3 having an opening closed by a cover made of, e.g., polypropylene which acts as an upper wall.

In the interior of the battery case 2, a plurality of sheets of prismatic flat positive electrodes 6 and negative electrodes 7 are laminated on each other with a separator 9 provided interposed therebetween. The laminate is disposed almost parallel to the side walls of the battery case 2.

The positive electrode 6 and the negative electrode 7 are connected to a pole 13 made of, e.g., Pb-Sn alloy at the portion thereof close to the upper corner through a strap 11 made of, e.g., Pb-Sn alloy. The pole 13 is columnar and is disposed in such an arrangement that the upper surface 15 thereof lies almost parallel to the cover 5.

A male thread member 21 comprising iron or the like having a flange portion 17 and a male thread portion 19 is secured with the male thread portion 19 being protruded from the upper surface 15 of the pole 13 and the flange portion 17 being embedded in the pole 13. The embedding of the male thread member 21 in the pole 13 is accomplished by casting a molten Pb-Sn alloy into a casting mold for the pole 13 in which the flange portion 17 of the male thread member 21 is set, and then allowing the molten Pb-Sn alloy to be solidified.

The cover 5 of the battery case is pierced with holes 23 through which the male thread portion 19 can pass at positions corresponding to that of the male thread portion 19.

On the inner surface of the cover 5 is provided with an annular protrusion 25 surrounding the through hole 23. The annular protrusion 25 is formed by, e.g., polypropylene integrally with the cover 5. The annular protrusion 25 is tapered towards the forward end thereof. Thus, the section of the annular protrusion 25 has a triangular shape the base of which faces the cover 5.

Outside the annular protrusion 25 is provided with an annular surround wall 27 formed integrally with the cover 5 protruding downward. The inner diameter of the surrounding wall 27 is somewhat greater than the outer diameter of the pole 13.

The procedure of assembly of the sealed type lead acid battery 1 of the present embodiment having the foregoing arrangement will be described hereinafter.

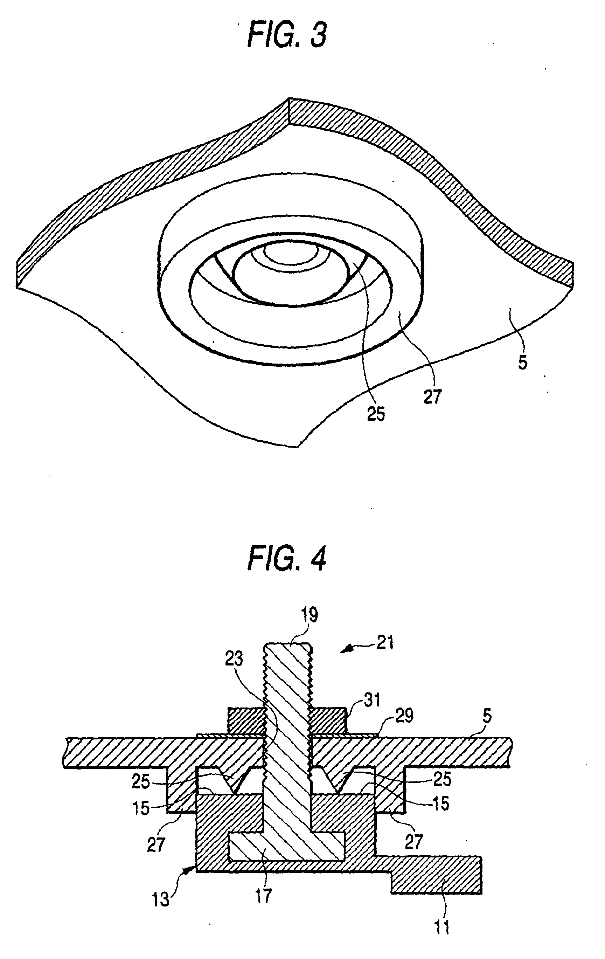

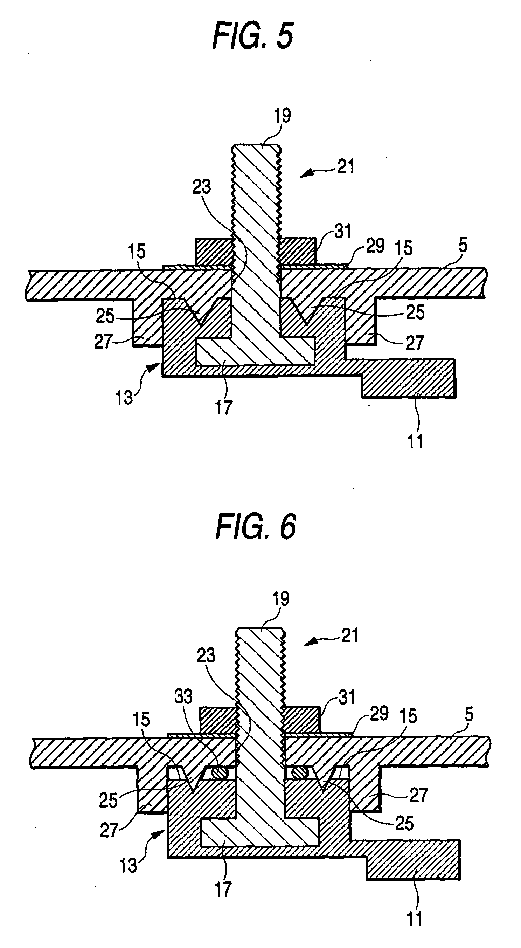

The following description will be made with reference to the case where to the pole 13 has been connected the positive electrode 6 or the negative electrode 7 through a strap 11. The male thread portion 19 of the pole 13 is then passed through the hole 23 to extend from the interior of the battery case 2 to the exterior of the battery case 2. Subsequently, a nut 31 comprising iron or the like as a female thread member is engaged with the male thread 19 protruding from the cover 5 with a washer 29. When the nut 31 is tightened, the pole 13 is pulled up and pressed against to the annular protrusion 25. As a result, the annular protrusion 25 bites the upper surface 15 of the pole 13 at the forward end thereof (see Figs. 4 and 5). The male thread portion 19 and the nut 31 are both mainly comprising tough iron and thus can be tightened at a considerably high torque until the annular protrusion 25 can bite the pole 13 thoroughly. This biting effect causes the interior of the battery case 2 and the exterior of the battery case 2 to be isolated from each other, assuring desired airtightness.

This biting effect further causes the pole 13 to be deformed in such an arrangement that the upper portion thereof extends horizontally. In this arrangement, the outer circumference of the pole 13 and the inner circumference of the surrounding wall 27 come into close contact with each other to improve the airtightness of the battery case.

The second to seventh embodiments of the present invention will be described hereinafter in connection with Figs. 6 to 11. Like numerals are used for like structures in Figs. 6 to 11. The description of the structure, action and effect of the same structures will be omitted. The second embodiment differs from the first embodiment in that an O-ring 33 comprising rubber or the like is provided interposed between the pole 13 and the inner surface of the cover 5 and inside the annular protrusion 25. Thus, in accordance with the second embodiment, when the nut 31 is engaged with the male thread 19 with the O-ring 33 interposed therebetween and tightened, the O-ring 33 causes the interior of the battery case 2 and the exterior of the battery case 2 to be isolated from each other, further improving the airtightness of the battery case.

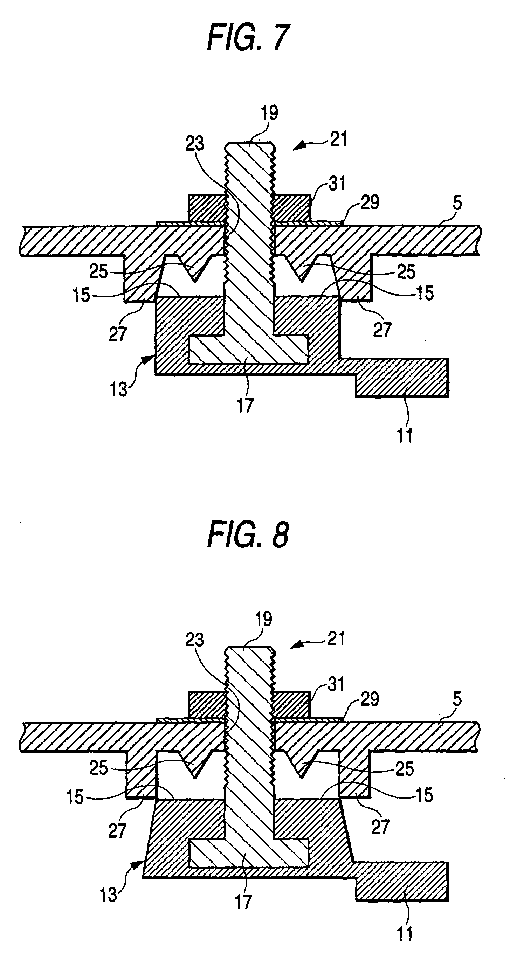

The third and fourth embodiments of the present invention will be described hereinafter in connection with Figs. 7 and 8. The third embodiment differs from the first embodiment in that the surrounding wall 27 is tapered in such an arrangement that the diameter of the inner circumference increases towards the lower end thereof. The fourth embodiment differs from the first embodiment in that the pole 13 has a tapered outer circumference the diameter of which decreases toward the upper end. In accordance with any of these embodiments, when the nut 31 is tightened to pull up the pole 13, the upper portion of the pole 13 comes in close and firm contact with the inner surface of the surrounding wall 27.

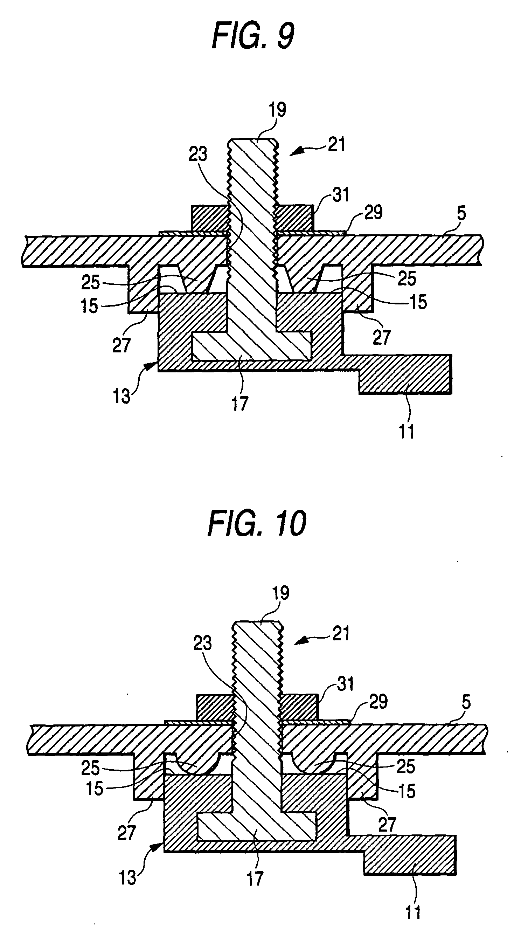

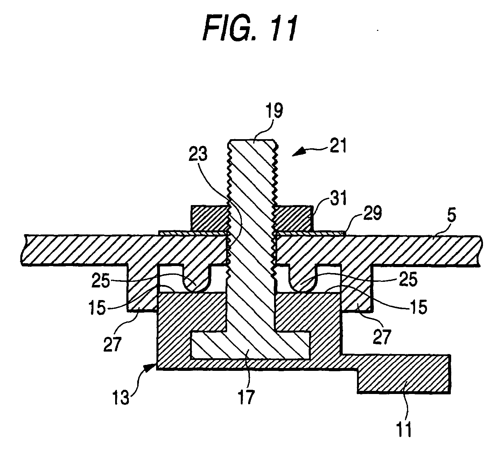

The fifth to seventh embodiments of the present invention will be described in connection with Figs. 9 and 11. The fifth to seventh embodiments differ from the first embodiment in that the annular protrusion 25 has a trapezoidal, semicircular or semi-ellipsoidal section. Even if the annular protrusion 25 has such a section, it can exert the same effect as exerted by the first embodiment.

The present invention is not limited to the embodiments described in the foregoing description and in connection with the attached drawings. The following embodiments fall within the technical scope of the present invention. Various changes and modifications can be further made therein without departing from the spirit and scope thereof.

While the invention has been described in detail and with reference to embodiments wherein the annular protrusion 25 and the surrounding wall 27 are made of, e.g., polypropylene, it will be apparent to those skilled in the art that the material of the annular protrusion 25 and the surrounding wall 27 is not specifically limited but may be a metal, polycarbonate, ABS, or polycarbonate/ABS.

While the invention has been described in detail and with reference to embodiments wherein the pole 15 is made of, e.g., Pb-Sn alloy, it will be apparent to those skilled in the art that the material of the pole 15 is not specifically limited so far as it is a deformable electrically-conductive material and may be pure lead or Pb-Sn alloy containing Se, Ag, As or the like.

One annular protrusion 25 was explained above as an example but, the number of annular protrusions 25 to be provided is not specifically limited but may be plural.

While the invention has been described in detail and with reference to specific embodiments thereof, it will be apparent to one skilled in the art that various changes and modifications can be made therein without departing from the spirit and scope thereof.

This application is based on Japanese patent application No. 2000-267517 filed on September 4, 2000, the entire contents thereof being hereby incorporated by reference.

## Claims

1. A sealed type lead acid battery comprising:
a battery case which has an upper wall having a hole,
an electrolytic solution contained in said battery case,
an electrode contained in said battery case,
an annular protrusion provided on the inner surface of said upper wall and surrounding the holes,
a pole connected to said electrode and disposed beneath said hole,
a male thread element having one end embedded in said pole and another end protruding from said pole to extend from the interior of said battery case to the exterior of said battery case through said hole, and
a female thread member engaged with said male thread member at the portion thereof protruding from said upper wall,
wherein said female thread member is tightened so that said annular protrusion bites into the upper surface of said pole.

2. The sealed type lead acid battery according to Claim 1, wherein said male thread member acts as a terminal.

3. The sealed type lead acid battery according to Claim 1 or 2, wherein said male thread member has a flange portion at one end thereof and said flange portion is embedded in said pole.

4. The sealed type lead acid battery according to any one of Claims 1 to 3, which further comprises a surrounding wall on the inner surface of said upper wall the outer circumference of said pole and the inner circumference of said surrounding wall come in close contact with each other by tightening said female thread.

5. The sealed type lead acid battery according to any one of Claims 1 to 4, wherein said pole is tapered such that the outer diameter decreases towards the upper end thereof.

6. The sealed type lead acid battery according to Claim 4, wherein said surrounding wall is tapered such that the inner diameter increases towards the lower end thereof.

7. The sealed type lead acid battery according to any one of Claims 1 to 6, wherein said pole comprises lead or lead alloy.

8. The sealed type lead acid battery according to any one of Claims 1 to 7, which further comprises an elastic body interposed between said pole and the inner surface of said upper wall and disposed inside said annular protrusion.

9. The sealed type lead acid battery according to Claim 8, wherein said elastic body is an O-ring.

10. The sealed type lead acid battery according to any one of Claims 1 to 9, which comprises a plurality of said annular protrusions.
